# EUROPEAN PATENT SPECIFICATION

(11) **EP 2 159 264 B1**
(45) Date of publication and mention of the grant of the patent: **10.10.2012**
(21) Application number: 08753061.4
(22) Date of filing: 21.05.2008
(51) Int. Cl.: C08L 33/08, C08K 3/04, C08K 5/18, C08K 5/37, C08K 5/372, C08K 5/524, C09K 3/10, F16L 11/06

(54) **ACRYLIC RUBBER COMPOSITION, VULCANIZED RUBBER THEREFROM AND USE THEREOF**
ACRYLKAUTSCHUKZUSAMMENSETZUNG, VULKANISIERTER KAUTSCHUK DARAUS UND VERWENDUNG
COMPOSITION DE CAOUTCHOUC ACRYLIQUE, CAOUTCHOUC VULCANISÉ À PARTIR DE CELLE-CI ET UTILISATION DE CELLE-CI

(30) Priority: 22.05.2007 JP 2007135464; 23.01.2008 JP 2008012158
(43) Date of publication of application: 03.03.2010
(73) Proprietor: Denki Kagaku Kogyo Kabushiki Kaisha, Tokyo 103-8338 (JP)
(72) Inventor: MIYAUCHI, Toshiaki, Itoigawa-shi Niigata 949-0393 (JP); ABE, Yasushi, Itoigawa-shi Niigata 949-0393 (JP)
(74) Representative: Hartz, Nikolai
(86) International application number: PCT/JP2008/059384
(87) International publication number: WO 2008/143300

(56) References cited:
- EP-A1- 1 449 881
- WO-A1-00/63289
- WO-A1-2005/116134
- WO-A1-2007/055038
- JP-A- 03 000 241
- JP-A- 06 057 037
- JP-A- 11 106 562
- JP-A- 11 217 481
- JP-A- 2000 026 713
- JP-A- 2000 143 873
- JP-A- 2000 248 139
- JP-A- 2002 302 576
- JP-A- 2006 206 659
- US-A1- 2002 037 970

## Description

### TECHNICAL FIELD

The present invention relates to an acrylic rubber composition having the heat resistance improved and a vulcanized rubber thereof and its applications.

### BACKGROUND ART

US 2002031910 discloses an acrylic elastomer composition.

Along with large sizing and higher functionalization of industrial machines, rubber components to be used for such machines are required to have higher heat resistance or durability. Particularly, even when they are used under a high temperature condition, they are required to have sufficient durability so that they can be continuously used for a long time.

In an engine room of an automobile, the temperature becomes high due to the heat generated from the engine. Therefore, for a rubber hose or the like to be used in an engine room of an automobile, one prepared by using an acryl rubber excellent in heat resistance and oil resistance as the raw material and having such a raw material vulcanized, has been used. However, due to exhaust emission controls, a trend toward higher output power of engine, etc. in recent years, thermal conditions in an engine room have become severer, and the rubber hose to be used therein is required to have higher heat resistance than ever.

As a means to improve the heat resistance of such a rubber hose, a technique of blending a specific carbon black to an acrylic rubber composition (e.g. Patent Document 1) or a technique of blending specific antioxidants in combination (e.g. Patent Document 2) has been known.
Patent Document 1: JP-A-2000-248139
Patent Document 2: JP-A-2002-302576

### DISCLOSURE OF THE INVENTION

### OBJECT TO BE ACCOMPLISHED BY THE INVENTION

The present invention is to provide an acrylic rubber composition whereby, when vulcanized, it is possible to obtain a vulcanized rubber excellent in heat resistance, especially with little changes in the elongation at break (EB) and hardness under heating conditions, and such a vulcanized rubber.

### MEANS TO ACCOMPLISH THE OBJECT

The present invention provides the following.
1. An acrylic rubber composition comprising a carboxyl group-containing acrylic rubber and, per 100 parts by mass of the carboxyl group-containing acrylic rubber, from 10 to 100 parts by mass of carbon black, from 0.1 to 15 parts by mass of at least one primary antioxidant selected from the group consisting of an amine antioxidant and a phenolic antioxidant and from 0.1 to 15 parts by mass of at least one secondary antioxidant selected from the group consisting of a phosphorus antioxidant and a sulfur antioxidant,
   wherein the carbon black is one having an average laminated height Lc of at least 2 nm in the C-axis direction of a laminar plane in its crystallite.
2. The acrylic rubber composition according to the above 1, wherein the carbon black is acetylene black.
3. The acrylic rubber composition according to any one of the above 1 or 2, wherein the primary antioxidant is an amine antioxidant.
4. The acrylic rubber composition according to any one of the above 1 to 3, wherein the primary antioxidant is 4,4'-α,α-dimethylbenzyldiphenylamine, and the secondary antioxidant is at least one member selected from the group consisting of tris(nonylphenyl) phosphite, triisodecyl phosphite and dilauryl thiodipropionate.
5. The acrylic rubber composition according to any one of the above 1 to 4, wherein the carboxyl group-containing acrylic rubber is a carboxyl group-containing acrylic rubber obtainable by copolymerizing a carboxyl group-containing unsaturated fatty acid with an unsaturated monomer so that the carboxyl group-containing unsaturated fatty acid be in a proportion of from 0.1 to 20 mass%.
6. The acrylic rubber composition according to any one of the above 1 to 5, which further contains at least one compound selected from the group consisting of 2-mercaptobenzimidazole, 2-mercaptomethylbenzimidazole and 4,5-mercaptomethylbenzimidazole.
7. The acrylic rubber composition according to any one of the above 1 to 6, which further contains a vulcanizer.
8. The acrylic rubber composition according to the above 7, wherein the vulcanizer is 2,2-bis[4-(4-aminophenoxy)phenyl]propane.
9. A vulcanized rubber obtained by vulcanizing the acrylic rubber composition as defined in any one of the above 1 to 8.
10. The vulcanized rubber according to the above 9, which has an elongation at break of at least 100% in a tensile test after exposure at 200°C for 7 days in accordance with JIS K6257.
11. A rubber hose comprising the vulcanized rubber as defined in the above 9 or 10.
12. A sealing article comprising the vulcanized rubber as defined in the above 9 or 10
13. A rubber vibration insulator comprising the vulcanized rubber as defined in the above 9 or 10.

### EFFECT OF THE INVENTION

The present invention provides an acrylic rubber composition and vulcanized rubber which ensure heat resistance, especially little changes in the elongation at break (EB) and hardness under heating conditions of the vulcanized rubber.

### BEST MODE FOR CARRYING OUT THE INVENTION

The acrylic rubber composition comprises a carboxyl group-containing acrylic rubber, a specific carbon black, a specific primary antioxidant and a specific secondary antioxidant.

The carboxyl group-containing acrylic rubber is one obtainable by copolymerizing an unsaturated monomer such as an acrylic acid alkyl ester with a carboxyl group-containing unsaturated fatty acid by a known method such as emulsion polymerization, suspension polymerization, solution polymerization or bulk polymerization.

The acrylic acid alkyl ester may, for example, be methyl acrylate, ethyl acrylate, n-propyl acrylate, isobutyl acrylate, n-butyl acrylate, n-pentyl acrylate, n-hexyl acrylate, n-octyl acrylate or 2-ethylhexyl acrylate.

Further, as the acrylic acid alkyl ester, n-decyl acrylate, n-dodecyl acrylate, n-octadecyl acrylate, cyanomethyl acrylate, 1-cyanoethyl acrylate, 2-cyanoethyl acrylate, 1-cyanopropyl acrylate, 2-cyanopropyl acrylate, 3-cyanopropyl acrylate, 4-cyanobutyl acrylate, 6-cyanohexyl acrylate, 2-ethyl-6-cyanohexyl acrylate or 8-cyanooctyl acrylate may, for example, be used.

Further, as the acrylic acid alkyl ester, an acrylic acid alkoxy alkyl ester may, for example, be used, such as 2-methoxyethyl acrylate, 2-ethoxyethyl acrylate, 2-(n-propoxy)ethyl acrylate, 2-(n-butoxy)ethyl acrylate, 3-methoxypropyl acrylate, 3-ethoxypropyl acrylate, 2-(n-propoxy)propyl acrylate or 2-(n-butoxy)propyl acrylate.

Further, as the acrylic acid alkyl ester, a fluorinated acrylic acid ester such as 1,1-dihydroperfluoroethyl (meth)acrylate, 1,1-dihydroperfluoropropyl (meth)acrylate, 1,1,5-trihydroperfluorohexyl (meth)acrylate, 1,1,2,2-tetrafluoroperfluoropropyl (meth)acrylate, 1,1,7-trihydroperfluoroheptyl (meth)acrylate, 1,1-dihydroperfluorooctyl (meth)acrylate or 1,1-dihydroperfluorodecyl (meth)acrylate; a hydroxy group-containing acrylic acid ester such as 1-hydroxypropyl (meth)acrylate, 2-hydroxypropyl (meth)acrylate or hydroxyethyl (meth)acrylate; a tertiary amino group-containing acrylic acid ester such as diethylaminoethyl (meth)acrylate or dibutylaminoethyl (meth)acrylate; or a methacrylate such as methyl methacrylate or octyl methacrylate may, for example, be used.

As the acrylic acid alkyl ester, among them, methyl acrylate, ethyl acrylate, n-butyl acrylate or isobutyl acrylate is preferred. As the acrylic acid alkyl ester, one of these compounds may be used alone or two or more monomers may be used in combination.

The carboxyl group-containing unsaturated fatty acid is not particularly limited, and it may, for example, be an unsaturated carboxylic acid such as acrylic or methacrylic acid; an aliphatic unsaturated dicarboxylic acid such as maleic acid, fumaric acid, itaconic acid or citraconic acid; or an aliphatic unsaturated dicarboxylic acid monoester such as monomethyl malate, monoethyl malate, mono-n-propyl malate, monoisopropyl malate, mono-n-butyl malate, monoisobutyl malate, monomethyl fumarate, monoethyl fumarate, mono-n-propyl fumarate, monoisopropyl malate, mono-n-butyl fumarate, monomethyl itaconate, monoethyl itaconate, mono-n-propyl itaconate, mono-n-propyl citraconate, mono-n-butyl citraconate or monoisobutyl citraconate. One of these compounds may be used alone, or two or more monomers may be used in combination.

As the carboxyl group-containing unsaturated fatty acid, among them, mono-n-butyl malate, monoisobutyl malate, mono-n-butyl fumarate or monoisobutyl fumarate is preferred.

The carboxyl group-containing unsaturated fatty acid is preferably copolymerized with the unsaturated monomer so that it will be in a proportion of from 0.1 to 20 mass%, preferably from 0.1 to 10 mass% in the obtainable carboxyl group-containing acrylic rubber, whereby the vulcanization properties of the obtainable carboxyl group-containing acrylic rubber will be improved.

To the carboxyl group-containing acrylic rubber, a crosslinkable monomer other than the acrylic acid alkyl ester, or another copolymerizable monomer may be copolymerized depending upon the particular purpose within a range not to impair the effects of the present invention.

The crosslinkable monomer other than the acrylic acid alkyl ester may, for example, be a carboxylic acid group-containing compound such as acrylic acid, methacrylic acid, crotonic acid, 2-pentenoic acid, maleic acid, fumaric acid or itaconic acid, an epoxy group-containing compound such as glycidyl acrylate, glycidyl methacrylate, allyl glycidyl ether or metharyl glycidyl ether; or an active chlorine-containing compound such as 2-chloroethyl vinyl ether, 2-chloroethyl acrylate, vinyl benzyl chloride, vinyl chloroacetate or allyl chloroacetate. One of these compounds may be used alone or two or more monomers may be used in combination.

With respect to the amount of such a crosslinkable monomer, it is preferably copolymerized so that it will be in a proportion of from 0.1 to 10 mass% in the obtainable carboxyl group-containing acrylic rubber.

The copolymerizable monomer may, for example, be an alkyl vinyl ketone such as methyl vinyl ketone; a vinyl or allyl ether, such as vinyl ethyl ether or allyl methyl ether; a vinyl aromatic compound such styrene, α-methylstylene, chlorostyrene, vinyl toluene or vinyl naphthalene; a vinyl nitrile such as acrylonitrile or methacrylonitrile; or an ethylenically unsaturated compound such as acrylamide, vinyl acetate, ethylene, propylene, butadiene, isoprene, pentadiene, vinyl chloride, vinylidene chloride, vinyl fluoride, vinylidene fluoride, vinyl propionate or an alkyl fumarate.

With respect to the amount of such another copolymerizable monomers, it is preferably copolymerized so that it will be in a proportion of from 0.1 to 10 mass%, more preferably from 1 to 7 mass%, in the obtainable carboxyl group-containing acrylic rubber.

The carbon black is one to be incorporated to improve the heat resistance of a vulcanized rubber obtainable by vulcanizing the acrylic rubber composition, and any of thermal black or acetylene black prepared by a heat decomposition method, or furnace black or channel black prepared by an incomplete combustion method may be used. It is one having an average laminated height Lc of at least 2 nm, preferably at least 2.5 nm, in the C-axis direction of a laminar plane in its crystallite, whereby the heat resistance of a vulcanized rubber thereby obtainable will be more improved. Lc is preferably at most 50 nm. Among such carbon blacks, acetylene black obtainable by thermal decomposition of acetylene gas is particularly preferred, since it is one having crystallization remarkable progressed, whereby the structure is highly developed, and the effect to improve the heat resistance of the vulcanized rubber is large. Here, the average laminated height Lc in the C-axis direction of a laminar plane in its crystallite can be determined by a X-ray diffraction method as disclosed in "Carbon Black Handbook" (p61-62, published by Carbon Black Association in 1995).

The amount of carbon black is from 10 to 100 parts by mass, preferably from 20 to 80 parts by mass, more preferably from 30 to 70 parts by mass, per 100 parts by mass of the acrylic rubber. If the amount exceeds 100 parts by mass, the processability tends to be poor, and scorching is likely to occur, or the embrittlement temperature of the vulcanized product tends to be high. If the amount is less than 10 parts by mass, the tensile strength or the modulus of the vulcanized product tends to be low.

The carbon black to be incorporated to the acrylic rubber composition of the present invention may be combined with at least one type of other carbon blacks within a range not to impair the purpose of the present invention.

The primary antioxidant is at least one antioxidant selected from an amine antioxidant and a phenolic antioxidant and is one to be incorporated in order to improve the heat resistance, particularly the elongation at break, of a vulcanized rubber obtainable by vulcanizing the acrylic rubber composition.

The amine antioxidant may, for example, be a diphenylamine antioxidant such as octylated diphenylamine, dioctylated diphenylamine, 4,4'-(α,α-dimethylbenzyl)diphenylamine, p-(p-toluene sulfonylamine)diphenylamine, a reaction product of diphenylamine with acetone, a reaction product of diphenylamine with isobutylene, a reaction product of diphenylamine with acetone and aniline, or various alkylated diphenylamines; p-phenylenediamine antioxidant, such as N,N'-diphenyl-p-phenylenediamine, N-isopropyl-N'-phenyl-p-phenylenediamine, N,N'-di-2-naphtyl-p-penylenediamine, N-cyclohexyl-N'-phenyl-p-phenylenediamine, N-phenyl-N'-(3-methaloyloxy-2-hydroxypropyl)-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-(1,3-dimethylbutyl)-N'-phenyl-p-phenylenediamine, a mixed diaryl-p-phenylenediamine or phenylhexyl-p-phenylenediamine; a naphthylamine antioxidant such as phenyl-α-naphthylamine or phenyl-β-naphthylamine; a quinoline antioxidant such as 2,2,4-trimethyl-1,2-dihydroquinoline or 6-ethoxy-2,2,4-trimethyl-1,2-dihydroquinoline; a condensed product of another aromatic amine with an aliphatic amine or a condensed product with butylaldehide with aniline. They may be used alone or in combination as a mixture of two or more of them.

As the amine antioxidant, 4,4'-(α,α-dimethylbenzyl)diphenylamine, octylate diphenylamine or dioctylated diphenylamine is preferred.

The phenolic antioxidant may, for example, be 2,6-di-t-butyl-p-cresol, 2-t-butyl-4-methoxyphenol, 3-t-butyl-4-methoxyphenol, 2,6-di-t-butyl-4-ethylphenol, 2,6-di-t-butyl-4-secbutylphenol, 2-(1-methylcyclohexyl)-4,6-dimethylphenol, 2,6-di-t-butyl-α-dimethylamino-p-cresol, 2,4,6-tri-t-butylphenol, styrenated phenol, alkylated phenol, 2,6-diphenyl-4-octadecyloxyphenol, n-octadecyl-3-(3,5-di-t-butyl-4-hydroxyphenyl)propionate, 2-t-butyl-6-(3'-t-butyl-5'-methyl-2'-hydroxybenzyl)-4-methylphenyl acrylate, or 2-[1-(2-hydroxy-3,5-di-t-butyl-3,5-di-t-pentylphenyl)-ethyl]4,6-di-t-pentylphenyl acrylate.

Further, the phenolic antioxidant may, for example, be 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis[6-(1-methylcyclohexyl)phenol, 2,2'-methylenebis(4-methylcyclohexyl)-p-cresol], 2,2'-methylenebis(6-α-methylbenzyl-p-cresol), a methylene-crosslinked polyhydric alkylphenol, bis[3,3-bis(4-hydroxy-3-t-butylphenyl)butyric acid]glycol ester, 4,4'-butylidenebis(6-t-butyl-m-cresol), 2,2'-ethylidenebis(4-sec-butyl-6-t-butylphenol), 2,2'-ethylidenebis(4,6-di-t-butylphenol), triethylene glycolbis[3-(3-t-butyl-5-methyl-4-hydroxyphenol)propionate], 1,6-hexanediolbis[3-(3,5-di-t-butyl-4-hydroxyphenyl)propionate], 1,1-bis-(4-hydroxyphenyl)cyclohexane, 2,2'-dihydroxy-3,3'-(a-methylcyclohexyl)-5,5'-dimethyldiphenylmethane, 3,9-bis[2-{3-(3-t-butyl-4-hydroxy-5-methylphenyl)propionyloxy}-1,1-dimethylethyl]-2,4,8,10-tetraoxyaspiro(5,5)undecane, an alkylated bisphenol, a butylated reaction product of p-cresol with dicyclopentadiene or a polybutylated bisphenol A.

Further, the phenolic antioxidant may, for example, be 1,1,3-tris(2-methyl-4-hydroxy-5-t-butylphenyl)butane, 1,3,5-tris(3,5-di-t-butyl-4-hydroxybenzyl)-2,4,6-trimethylbenzene, 1,3,5-tris(4-t-butyl-3-hydroxy-2,6-dimethylbenzyl) isocyanurate, 1,3,5-tris(3,5-di-t-butyl-4-hydroxylbenzyl) isocyanurate, a 3,5-di-t-butyl-4-hydroxyhydocinnamic acid triester of 1,3,5-tri(2-hydroxyethyl)-S-triazine-2,4,6-(1 H,3H,5H)trione, or tetrakis[methylene-3-(3,5-di-t-butyl-4-hydroxyphenyl)propionate]methane.

Further, the phenolic antioxidant may, for example, be 4,4'-thiobis(6-t-butyl-m-cresol), 4,4'-thoibis(6-t-butyl-o-cresol), bis(3,5-di-t-butyl-4-hydroxybenzyl) sulfide, 2,2-thiobis(4-methyl-6-t-butylphenol), 2,2-thiodiethylenebis[3-(3,5-di-t-butyl-4-hydroxyphenyl)propionate], 2,4-bis[(octylthio)methyl]-o-cresol, N,N'-hexamethylenebis(3,5-di-t-butyl-4-hydroxyhydrocinnamde), 2,4,6-tris-(3,5-di-t-butyl-4-hydroxybenzylthio)-1,3,5-triazine, 2,4-bis(n-octylthio)-6-(4-hydroxy-3,5-di-t-butylaniline)-1,35-triazine, bis(3,5-di-t-butyl-4-hydroxybenzylphosphonic acid ethyl)calcium, or 3,5-dit-butyl-4-hydroxybenzylphosphonate diethyl ester.

As the phenolic antioxidant, 2,6-di-t-butyl-p-cresol, 2,2'-methylenebis(4-methyl-6-t-butylphenol) or 4,4'-thiobis(4-t-butyl-m-cresol) is preferred.

The amount of such primary antioxidants is, in total, from 0.1 to 15 parts by mass, preferably from 0.5 to 10 parts by mass, particularly preferably from 1 to 5 parts by mass, per 100 parts by mass of the acrylic rubber. If the amount exceeds 15 parts by mass, the tensile strength at break after thermal aging tends to be low, and the compression set after thermal aging tends to be large. If the amount is less than 0.1 part by mass, the elongation at break after thermal aging tends to be small.

The secondary antioxidant is at least one antioxidant selected from a phosphorus antioxidant and a sulfur antioxidant and is one to be incorporated in order to improve the heat resistance, particularly the elongation at break, of a vulcanized rubber obtained by vulcanizing the acrylic rubber composition.

The phosphorus antioxidant may, for example, be triphenyl phosphite, diphenyl-2-ethylhexyl phosphite, diphenylisooctyl phosphite, diphenylisodecyl phosphite, diphenyltridecyl phosphite, diphenylnonylphenyl phosphite, dibutylhydrogen phosphite, 4,4-butylidenebis(3-methyl-6-t-butylphenyldidodecyl) phosphite, tris(2-ethylhexyl) phosphite, triisodecyl phosphite, tris(tridecyl) phosphite, tris(nonylphenyl) phosphite, tris(dinonylphenyl) phosphite, diisodecylpentaerythritol diphosphite, distearylpentaerythritol diphosphite, bisnonylphenylpentaerythritol diphosphite, tris(4-oxy-2,5-di-t-dibutylphenyl)phosphite, tris(4-oxy-3,5-di-t-butylphenyl) phosphite, tris(2,4-di-t-butylphenyl) phosphite, 1,1,3-tris(2-methyl-4-ditridecyl phophite-5-t-butylphenyl)butane, 2,2-methylenebis(4,6-di-t-butylphenyl)octyl phosphite, tetraphenyldipropylene glycol diphosphite, tetraphenyltetra(tridecyl)pentaerythritol tetraphosphite, 4,4'-butylidenebis(3-methyl-6-t-butylditridecyl phosphite), 2,2'-ethylidenebis(3-methyl-6-t-butylphenol)fluorophosphite, cyclicneopentanetetraylbis(octadecyl) phosphite, 4,4'-isopropylidenediphenolalkyl (C₁₂-C₁₈) phosphite, cyclicneopentanetetraylbis(2,4-di-t-butylphenyl phosphite), cyclicneopentanetetraylbis(2,6-di-t-butyl-4-methylphenyl phosphite), cyclicneopentanetetraylbis(nonylphenyl phosphite) or a hydrogenated bisphenol A-pentaerythritol phosphite polymer.

As the phosphorus antioxidant, tris(nonylphenyl) phosphite, triisodecyl phosphite, triisodecyl phosphite, triphenyl phosphite or tris(2,4-di-t-butylphenyl) phosphite is preferred.

The sulfur antioxidant may, for example, be a dialkyl thiodipropionate such as dilauryl thiodipropionate, ditridecyl thiodipropionate, dimyristyl thiodipropionate or distearyl thiodipropionate; or an ester of an alkyl thiopropionic acid such as butyl thiopropionic acid, octyl thiopropionic acid, lauryl thiopropionic acid or stearyl thiopropionic acid, with a polyhydric alcohol such as glycerol, trimethylol methane, trimethylol propane, pentaerythritol or trishydroxyethylisocyanurate, e.g. pentaerythritoltetralauryl thiopropionate.

As the sulfur antioxidant, dilauryl thiodipropionate, ditridecyl thiodipropionate, dimyristyl thiodipropionate or pentaerythritoltetralauryl thiopropionate is preferred.

The secondary antioxidant is preferably at least one member selected from tris(nonylphenyl) phosphite, triisodecyl phosphite and dilauryl thiodipropionate.

It is particularly preferred that the primary antioxidant is 4,4'-α,α-dimethylbenzyldiphenylamine, and the secondary antioxidant is at least one member selected from the group consisting of tris(nonylphenyl) phosphite, triisodecyl phosphite and dilauryl thiodipropionate.

To the acrylic rubber composition, at least one compound selected from 2-mercaptobenzimidazole, 2-mercaptomethylbenzimidazole and 4,5-mercaptomethylbenzimidazole, is preferably incorporated, whereby the heat resistance, particularly the elongation at break (EB) of the obtainable vulcanizable rubber will be further improved. The amount of such compounds is preferably from 0.1 to 5 parts by mass, further preferably from 0.5 to 2.0 parts by mass, in total, per 100 parts by mass of the acrylic rubber.

The acrylic rubber composition may further be vulcanized by adding a vulcanizer or a vulcanization accelerator, to obtain a vulcanized rubber.

The vulcanizer is not particularly limited so long as it is one commonly employed for vulcanization of an acrylic rubber composition, and it may, for example, be an aromatic polyamine compound such as 4,4'-bis(4-aminophenoxy)biphenyl, 4,4'-diaminodiphenyl sulfide, 1,3-bis(4-aminophenoxy)-2,2-dimethylpropane, 1,3-bis(4-aminophenoxy)benzene, 1,4-bis(4-aminophenoxy)benzene, 1,4-bis(4-aminophenoxy)pentane, 2,2-bis[4-(4-aminophenoxy)phenyl]propane, 2,2-bis[4-(4-aminophenoxy)phenyl]sulfone, 4,4'-diaminodiphenyl sulfone, bis(4-3-aminophenoxy)phenyl sulfone, 2,2-bis[4-(4-aminophenoxy)phenyl]hexafluoropropane, 3,4'-diaminophenyl ether, 4,4'-diaminodiphenyl ether, 4,4'-diaminobenzanilide, or bis[4-(4-aminophenoxy)phenyl]sulfone; or an aliphatic polyamine compound such as hexamethylenediamine, hexamethylenediamine carbonate, N,N'-dicinnamylidene-1,6-hexanediamine, diethylenetriamine, triethylenetriamine or tetraethylenepentamine.

As the vulcanizer, 2,2'-bis[4-(4-aminophenoxy)phenyl]propane, hexamethylenediamine carbonate or N,N'-dicinnamylidene-1,6-hexanediamine is preferred, and 2,2-bis[4-(4-aminophenoxy)phenyl]propane is more preferred.

The amount of the vulcanizer is not particularly limited, but it is preferably from 0.1 to 10 parts by mass, more preferably from 0.4 to 5 parts by mass, per 100 parts by mass of the acrylic rubber composition. When the amount is from 0.1 to 10 parts by mass, the required sufficient vulcanization treatment can be carried out. Further, for the purpose of adjusting the vulcanization rate, a curing agent for an epoxy resin, for example, a vulcanization accelerator such as a thermally decomposed ammonium salt, an organic acid, an acid anhydride, an amine, sulfur or a sulfur compound, may be added within a range not to reduce the effect of the present invention.

As the vulcanization accelerator, a guanidine compound, a diazabicycloalkene compound, an alkali metal salt of an organic weak acid, a quaternary onium salt of an organic weak acid or a basic compound such as a tertiary amine compound may be used, and a guanidine compound is preferably employed. The guanidine compound may, for example, be 1,3-diphenylguanidine, di-o-tolylguanidine, guanidine, tetramethylguanidine or dibutylguanidine. Among them, 1,3-diphenylguanidine or di-o-tolylguanidine is preferred.

The amount of the vulcanization accelerator is not particularly limited, and it is preferably from 0.1 to 10 parts by mass, more preferably from 0.3 to 5 parts by mass, per 100 parts by mass of the acrylic rubber composition. When it is from 0.1 to 10 parts by mass, the required sufficient vulcanization treatment can be carried out.

A vulcanized rubber of the acrylic rubber composition is one obtainable by kneading these compounds at a temperature of not higher than the vulcanization temperature. The obtained rubber composition may be formed into a desired various shape, followed by vulcanization to obtain a vulcanized product, or it may be vulcanized and then may be formed into various shapes. The vulcanization temperature may suitably be set depending upon the formulation of the rubber composition or the type of the vulcanizer, and it is usually preferably within a range of from 140 to 200°C, more preferably within a range of from 150 to 180°C.

As a machine to knead, mold or vulcanize the acrylic rubber composition or its vulcanized product, one commonly used in the rubber industry may be used.

The vulcanized rubber of the acrylic rubber composition is used, particularly, for rubber hoses, sealing components such as gaskets or packings, and vibration insulating rubber components. With respect to rubber hoses, it is specifically used for hoses to be used for e.g. various pipings for automobiles, construction machines or hydraulic equipments. Particularly, rubber hoses obtainable from the acrylic rubber composition and its vulcanized product of the present invention are excellent in rubber physical properties such as extrusion processablity, tensile strength, etc. and further excellent in oil resistance, cold resistance and heat resistance, so that they can be quite suitably used as rubber hoses for automobiles, which recently tend to be used in a severer environment.

Here, the heat resistance can be experimentally evaluated in accordance with JIS K6257 by obtaining elongation at break by tensile tests after exposure at 200°C for 7 days. The larger the absolute value of this elongation at break, the better the heat resistance. The absolute value of this elongation at break being maintained at a level of at least 100% means that the heat resistance is excellent.

A structure of a rubber hose may be a single hose obtained from the acrylic rubber composition of the present invention. Otherwise, depending upon the application of the rubber hose, it may be applicable to a composite hose wherein a synthetic rubber other than the acrylic rubber composition of the present invention, for example, a fluorinated rubber, a fluorine-modified acrylic rubber, a hydrin rubber, CSM, CR, NBR, an ethylene/propylene rubber, an acrylic rubber other than the acrylic rubber composition of the present invention or the like, is used for the inner layer, an inter layer or an outer layer. Further, depending upon the properties required for a rubber hose, it is also possible to provide an intermediate or outermost layer of the rubber hose with a reinforcing fiber or wire, as is generally commonly carried out.

### EXAMPLES

Now, the present invention will be described in further detail with reference to Examples. However, it should be understood that the present invention is by no means restricted to such Examples.

### PREPARATION EXAMPLE 1

### PREPARATION OF CARBOXYL GROUP-CONTAINING ACRYLIC RUBBER A

Into a pressure resistant reactor having an internal capacity of 40 liters, 11 kg of a mixed liquid of 5.5 kg of ethyl acrylate and 5.5 kg of n-butyl acrylate, 17 kg of an aqueous solution containing 4 wt% of partially saponifized polyvinyl alcohol, 22 g of sodium acetate and 120 g of monobutyl malate were introduced and preliminarily thoroughly mixed by a stirrer to prepare a uniform suspension. The air at the upper portion in the vessel was replaced with nitrogen, then ethylene was injected to the upper portion in the vessel to adjust the pressure to 21 kg/cm². Stirring was continued to maintain the interior at 55°C, and then from a separate inlet, an aqueous t-butyl hydroperoxide solution was injected to initiate the polymerization. The internal temperature was maintained at 55°C during the reaction, and the reaction was completed in 6 hours. An aqueous sodium borate solution was added to the formed polymer solution to solidify the polymer, followed by dehydration and drying to obtain a carboxyl group-containing acrylic rubber.

### EXAMPLES 1 TO 21 AND COMPARATIVE EXAMPLES 1 TO 7

### PREPARATION OF ACRYLIC RUBBER COMPOSITION AND VULCANIZED PRODUCT

100 parts by mass of the carboxyl group-containing acrylic rubber obtained in Preparation Example 1, 1 part by mass of stearic acid and the compounds as identified in Tables 1 and 4, were kneaded by eight-inch open rolls and rolled into a sheet having a thickness of 2.4 mm, which was then subjected to press vulcanization at 170°C for 20 minutes by a press vulcanization machine. The vulcanized product was further heat treated for 4 hours at 170°C in a gear oven, and then subjected to physical property tests.

### PHYSICAL PROPERTY TEST METHODS

The tensile strength and elongation were measured with accordance with JIS K6251. The hardness was measured in accordance with JIS K6253. For the heat resistance, in accordance with JIS K6257, the elongation at break and the change in hardness by a tensile test after exposure at 200°C for 168 hours were obtained. The smaller the absolute value of the change in hardness, the better the heat resistance. The compression set was measured in accordance with K6262.

The evaluation results in the respective Examples and Comparative Examples are shown in Tables 1 to 4. In order for an acrylic rubber composition to satisfy the required properties for its particular application, the composition and properties of the rubber itself, the types and amounts of various additives, etc., are selected. As is evident from these Tables, the vulcanized rubber obtained by vulcanizing the acrylic rubber composition of the present application shows less changes in its elongation at break (EB) and hardness under heating conditions.

**TABLE 1**

| Composition (parts by mass) | | | Examples | | | | | | |
|---|---|---|---|---|---|---|---|---|---|
| | | | 1 * | 2 * | 3 * | 4 | 5 | 6 | 7 |
| Carboxyl group-containing acrylic rubber A | | | 100 | 100 | 100 | 100 | 100 | 100 | 100 |
| Carboxyl group-containing acrylic rubber B | | | | | | | | | |
| Carboxyl group-containing acrylic rubber C | | | | | | | | | |
| Carbon black (HAF-HS) | | | 50 | 50 | 50 | | | | |
| Carbon black (FEF) | | | | | | | | | |
| Carbon black (SRF) | | | | | | | | | |
| Acetylene black | | | | | | 55 | 55 | 55 | 55 |
| 4,4'-α,α-dimethylbenzyldiphenylamine | | | 2 | 2 | 2 | 2 | 2 | 2 | 2 |
| Tris(nonylphenyl) phosphite | | | 1 | | | 1 | | | 3 |
| Triisodecyl phosphite | | | | 1 | | | 1 | | |
| Dilauryl thiodipropionate | | | | | 1 | | | 1 | |
| 2-mercaptobenzimidazol | | | 0.5 | 0.5 | 0.5 | 0.5 | 0.5 | 0.5 | 0.5 |
| 2,2-bis[4-(4-amino-phenoxy)phenyl]propane | | | 1 | 1 | 1 | 1 | 1 | 1 | 1 |
| di-o-tolylguanidine | | | 1 | 1 | 1 | 1 | 1 | 1 | 1 |
| Normal state physical properties | Tensile strength | MPa | 12.6 | 12.6 | 12.2 | 9.4 | 9.6 | 9.8 | 9.8 |
| | Elongation at break | % | 356 | 370 | 368 | 420 | 423 | 440 | 422 |
| | Hardness (JIS-A) | Degree | 65 | 66 | 65 | 65 | 65 | 65 | 56 |
| Heat resistance 200°Cx168 h | Tensile strength | MPa | 6.2 | 6.2 | 6.6 | 7.2 | 6.8 | 7.0 | 7.0 |
| | Elongation at break | % | 160 | 165 | 151 | 171 | 176 | 165 | 170 |
| | Absolute value of hardness change ΔHs | Degree | 24 | 21 | 24 | 22 | 20 | 22 | 25 |
| Compression set | 200°Cx22 h | % | 34 | 37 | 30 | 27 | 30 | 25 | 29 |

| | | | | | | | | | |
|---|---|---|---|---|---|---|---|---|---|
| * Reference | | | | | | | | | |

**TABLE 2**

| Composition (parts by mass) | | | Examples | | | | | | |
|---|---|---|---|---|---|---|---|---|---|
| | | | 8 | 9 | 10 | 11 | 12 | 13 * | 14 * |
| Carboxyl group-containing acrylic rubber A | | | 100 | 100 | 100 | 100 | 100 | 100 | 100 |
| Carboxyl group-containing acrylic rubber B | | | | | | | | | |
| Carboxyl group-containing acrylic rubber C | | | | | | | | | |
| Carbon black (HAF-HS) | | | | | | | | 50 | 50 |
| Carbon black (FEF) | | | | | | | | | |
| Carbon black (SRF) | | | | | | | | | |
| Acetylene black | | | 55 | 55 | 55 | 55 | 55 | | |
| 4,4'-α,α-dimethylbenzyldiphenylamine | | | 2 | 5 | 2 | 2 | 2 | 2 | 2 |
| Tris(nonylphenyl) phosphite | | | 1 | 1 | 1 | | | 1 | |
| Triisodecyl phosphite | | | | | | 1 | | | 1 |
| Dilauryl thiodipropionate | | | | | | | 1 | | |
| 2-mercaptobenzimidazol | | | 2 | 0.5 | | | | | |
| 2,2-bis[4-(4-amino-phenoxy)phenyl]propane | | | 1 | 1 | 1 | 1 | 1 | 1 | 1 |
| di-o-tolylquanidine | | | 1 | 1 | 1 | 1 | 1 | 1 | 1 |
| Normal state physical properties | Tensile strength | MPa | 9.4 | 9.0 | 9.8 | 10.1 | 10.4 | 12.4 | 12.4 |
| | Elongation at break | % | 428 | 442 | 432 | 435 | 433 | 339 | 361 |
| | Hardness (JIS-A) | Degree | 66 | 64 | 64 | 64 | 65 | 65 | 64 |
| Heat resistance 200°C×168 h | Tensile strength | MPa | 7.9 | 6.5 | 7.0 | 6.8 | 6.9 | 5.6 | 6.0 |
| | Elongation at break | % | 161 | 175 | 162 | 166 | 159 | 155 | 158 |
| | Absolute value of hardness change ΔHs | Degree | 25 | 24 | 25 | 22 | 25 | 27 | 28 |
| Compression set | 200°Cx22 h | % | 28 | 29 | 25 | 26 | 23 | 36 | 36 |

| | | | | | | | | | |
|---|---|---|---|---|---|---|---|---|---|
| * Reference | | | | | | | | | |

**TABLE 3**

| Composition (parts by mass) | | | Examples | | | | | | |
|---|---|---|---|---|---|---|---|---|---|
| | | | 15 * | 16 * | 17 * | 18 * | 19 | 20 * | 21 |
| Carboxyl group-containing acrylic rubber A | | | 100 | 100 | 100 | | | | |
| Carboxyl group-containing acrylic rubber B | | | | | | 100 | 100 | | |
| Carboxyl group-containing acrylic rubber C | | | | | | | | 100 | 100 |
| Carbon black (HAF-HS) | | | 50 | | | 55 | | 30 | |
| Carbon black (FEF) | | | | 60 | | | | | |
| Carbon black (SRF) | | | | | 70 | | | | |
| Acetylene black | | | | | | | 60 | | 35 |
| 4,4'-α,α-dimethylbenryldiphenylamine | | | 2 | 2 | 2 | 2 | 2 | 2 | 2 |
| Tris(nonylphenyl) phosphite | | | | 1 | 1 | 1 | 1 | 1 | 1 |
| Triisodecyl phosphite | | | | | | | | | |
| Dilauryl thiodipropionate | | | 1 | | | | | | |
| 2-mercaptobenzimidazol | | | | | | 0.5 | 0.5 | 0.5 | 0.5 |
| 2,2-bis[4-(4-amino-phenoxy)phenyl]propane | | | 1 | 1 | 1 | 1 | 1 | 1 | 1 |
| di-o-tolylguanidine | | | 1 | 1 | 1 | 1 | 1 | 1 | 1 |
| Normal state physical properties | Tensile strength | MPa | 12.8 | 10.2 | 8.8 | 9.4 | 6.9 | 17.0 | 14.2 |
| | Elongation at break | % | 356 | 300 | 315 | 276 | 316 | 458 | 478 |
| | Hardness (JIS-A) | Degree | 65 | 63 | 60 | 68 | 67 | 63 | 65 |
| Heat resistance 200°C×168 h | Tensile strength | MPa | 6.2 | 5.0 | 5.1 | 6.3 | 6.7 | 6.1 | 9.5 |
| | Elongation at break | % | 145 | 148 | 150 | 127 | 147 | 88 | 140 |
| | Absolute value of hardness change ΔHs | Degree | 27 | 26 | 28 | 23 | 22 | 21 | 15 |
| Compression set | 200°Cx22 h | % | 34 | 29 | 30 | 28 | 20 | 25 | 25 |

| | | | | | | | | | |
|---|---|---|---|---|---|---|---|---|---|
| * Reference | | | | | | | | | |

**TABLE 4**

| Composition (parts by mass) | | | Comparative Examples | | | | | | |
|---|---|---|---|---|---|---|---|---|---|
| | | | 1 | 2 | 3 | 4 | 5 | 6 | 7 |
| Carboxyl group-containing acrylic rubber A | | | 100 | 100 | 100 | 100 | 100 | | |
| Carboxyl group-containing acrylic rubber B | | | | | | | | 100 | |
| Carboxyl group-containing acrylic rubber C | | | | | | | | | 100 |
| Carbon black (HAF-HS) | | | 50 | 50 | 50 | 50 | 50 | 55 | 30 |
| Carbon black (FEF) | | | | | | | | | |
| Carbon black (SRF) | | | | | | | | | |
| Acetylene black | | | | | | | | | |
| 4,4'-α,α-dimethylbenzyldiphenylamine | | | | 2 | 2 | 16 | 0.05 | 2 | 2 |
| Tris(nonylphenyl) phosphite | | | | | | 1 | 1 | | |
| Triisodecyl phosphite | | | | | | | | | |
| Dilauryl thiodipropionate | | | | | | | | | |
| 2-mercaptobenzimidazol | | | | | 1 | | | | |
| 2,2-bis[4-(4-amino-phenoxy)phenyl]propane | | | 1 | 1 | 1 | 1 | 1 | 1 | 1 |
| di-o-tolylquanidine | | | 1 | 1 | 1 | 1 | 1 | 1 | 1 |
| Normal state physical properties | Tensile strength | MPa | 13.0 | 12.6 | 12.2 | 8.5 | 12.9 | 9.8 | 17.4 |
| | Elongation at break | % | 334 | 339 | 340 | 392 | 340 | 244 | 414 |
| | Hardness (JIS-A) | Degree | 65 | 64 | 65 | 64 | 65 | 67 | 63 |
| Heat resistance 200°C× 168 h | Tensile strength | MPa | 6.6 | 6.1 | 6.6 | 4.3 | 6.7 | 7.9 | 5.6 |
| | Elongation at break | % | 50 | 129 | 128 | 151 | 66 | 95 | 52 |
| | Absolute value of hardness change ΔHs | Degree | 28 | 27 | 27 | 30 | 27 | 24 | 21 |
| Compression set | 200°Cx22 h | % | 34 | 35 | 37 | 55 | 34 | 25 | 23 |

Materials used in Tables 1 to 4 are as follows.
1) Carboxyl group-containing acrylic rubber B: AR-12 manufactured by ZEON CORPORATION
2) Carboxyl group-containing acrylic rubber C: VAMAC-G manufactured by E.I. du Pont de Nemours & Co., Inc.
3) Carbon black (HAF-HS): Seast 3H (Lc= at most 1.8 nm), manufactured by Tokai Carbon Co., Ltd.
4) Carbon black (FEF): Asahi #60 (Lc= at most 1.8 nm), manufactured by Asahi Carbon Co., Ltd.
5) Carbon black (SRF): Asahi #50 (Lc= at most 1.8 nm), manufactured by Asahi Carbon Co., Ltd.
6) Acetylene black: DENKA BLACK granule product (Lc= 3.5 nm), manufactured by Denki Kagaku Kogyo Kabushiki Kaisha

### INDUSTRIAL APPLICABILITY

The present invention provides an acrylic rubber composition to provide, when vulcanized, a vulcanized rubber having heat resistance, particularly with little changes in its elongation at break (EB) and hardness under heating conditions, and such vulcanized rubber. The vulcanized rubber is particularly useful as a rubber hose, a sealing component or a vibration-insulating rubber component.

The entire disclosures of Japanese Patent Application No. 2007-135464 filed on May 22, 2007 and Japanese Patent Application No. 2008-012158 filed on January 23, 2008 including specifications, claims and summaries are incorporated herein by reference in their entireties.

## Claims

1. An acrylic rubber composition comprising a carboxyl group-containing acrylic rubber and, per 100 parts by mass of the carboxyl group-containing acrylic rubber, from 10 to 100 parts by mass of carbon black, from 0.1 to 15 parts by mass of at least one primary antioxidant selected from the group consisting of an amine antioxidant and a phenolic antioxidant and from 0.1 to 15 parts by mass of at least one secondary antioxidant selected from the group consisting of a phosphorus antioxidant and a sulfur antioxidant,
wherein the carbon black is one having an average laminated height Lc of at least 2 nm in the C-axis direction of a laminar plane in its crystallite.

2. The acrylic rubber composition according to Claim 1, wherein the carbon black is acetylene black.

3. The acrylic rubber composition according to any one of Claims 1 to 2, wherein the primary antioxidant is an amine antioxidant.

4. The acrylic rubber composition according to any one of Claims 1 to 3, wherein the primary antioxidant is 4,4'-α,α-dimethylbenzyldiphenylamine, and the secondary antioxidant is at least one member selected from the group consisting of tris(nonylphenyl) phosphite, triisodecyl phosphite and dilauryl thiodipropionate.

5. The acrylic rubber composition according to any one of Claims 1 to 4, wherein the carboxyl group-containing acrylic rubber is a carboxyl group-containing acrylic rubber obtainable by copolymerizing a carboxyl group-containing unsaturated fatty acid with an unsaturated monomer so that the carboxyl group-containing unsaturated fatty acid be in a proportion of from 0.1 to 20 mass%.

6. The acrylic rubber composition according to any one of Claims 1 to 65, which further contains at least one compound selected from the group consisting of 2-mercaptobenzimidazole, 2-mercaptomethylbenzimidazole and 4,5-mercaptomethylbenzimidazole.

7. The acrylic rubber composition according to any one of Claims 1 to 6, which further contains a vulcanizer.

8. The acrylic rubber composition according to Claim 7, wherein the vulcanizer is 2,2-bis[4-(4-aminophenoxy)phenyl]propane.

9. A vulcanized rubber obtained by vulcanizing the acrylic rubber composition as defined in any one of Claims 1 to 8.

10. The vulcanized rubber according to Claim 9, which has an elongation at break of at least 100% in a tensile test after exposure at 200°C for 7 days in accordance with JIS K6257.

11. A rubber hose comprising the vulcanized rubber as defined in Claim 9 or 10.

12. A sealing article comprising the vulcanized rubber as defined in Claim 9 or 10.

13. A rubber vibration insulator comprising the vulcanized rubber as defined in Claim 9 or 10.

## Patentansprüche

1. Acrylkautschukzusammensetzung, umfassend einen Carbonsäuregruppen-enthaltenden Acrylkautschuk und pro 100 Gewichtsteile des Carbonsäuregruppen-enthaltenden Acrylkautschuks 10 bis 100 Gewichtsteile Ruß, 0,1 bis 15 Gewichtsteile mindestens eines primären Antioxidationsmittels, ausgewählt aus der Gruppe, bestehend aus einem Amin-Antioxidationsmittels und einem phenolischen Antioxidationsmittels, sowie 0,1 bis 15 Gewichtsteile mindestens eines sekundären Antioxidationsmittels, ausgewählt aus der Gruppe, bestehend aus einem Phosphor-Antioxidationsmittels und einem Schwefel-Antioxidationsmittels, wobei der Ruß derjenige ist, der eine mittlere Schichthöhe Lc von mindestens 2 nm in der Richtung der C-Achse einer Schichtfläche in dessen Kristalliten aufweist.

2. Die Acrylkautschukzusammensetzung nach Anspruch 1, wobei der Ruß ein Acetylenruß ist.

3. Die Acrylkautschukzusammensetzung nach einem der Ansprüche 1 oder 2, wobei das primäre Antioxidationsmittel ein Amin-Antioxidationsmittel ist.

4. Die Acrylkautschukzusammensetzung nach einem der Ansprüche 1 bis 3, wobei das primäre Antioxidationsmittel 4,4'-α,α-Dimethylbenzyldiphenylamin ist und das sekundäre Antioxidationsmittel mindestens ein Element ist, das ausgewählt ist aus der Gruppe, bestehend aus Tris(nonylphenyl)phosphit, Thirisodecylphosphit und Dilaurylthiodipropionat.

5. Die Acrylkautschukzusammensetzung nach einem der Ansprüche 1 bis 4, wobei der Carbonsäuregruppen-enthaltende Acrylkautschuk ein Carbonsäuregruppenenthaltender Acrylkautschuk ist, der erhältlich ist durch Copolymerisation einer Carbonsäuregruppen-enthaltenden ungesättigten Fettsäure mit einem ungesättigten Monomer, sodass die Carbonsäuregruppen-enthaltende ungesättigte Fettsäure in einem Anteil von 0,1 bis 20 Gewichts-% vorliegt.

6. Die Acrylkautschukzusammensetzung nach einem der Ansprüche 1 bis 5, die ferner mindestens eine Verbindung enthält, die ausgewählt ist aus der Gruppe, bestehend aus 2-Mercaptobenzimidazol, 2-Mercaptomethylbenzimidazol und 4,5-Mercaptomethylbenzimidazol.

7. Die Acrylkautschukzusammensetzung nach einem der Ansprüche 1 bis 6, die ferner ein Vulkanisationsmittel enthält.

8. Die Acrylkautschukzusammensetzung nach Anspruch 7, wobei das Vulkanisationsmittel 2,2-Bis[4-(4-aminophenoxy)phenyl]propan ist.

9. Vulkanisierter Kautschuk, erhalten durch Vulkanisation der Acrylkautschukzusammensetzung, wie sie in einem der Ansprüche 1 bis 8 definiert wird.

10. Der vulkanisierte Kautschuk nach Anspruch 9, der eine Reißfestigkeit von mindestens 100 % in einem Test aufweist nach Aussetzen bei 200°C für 7 Tage gemäß JIS K6257.

11. Kautschukschlauch, umfassend den vulkanisierten Kautschuk, der in Anspruch 9 oder 10 definiert wird.

12. Dichtung, umfassend den vulkanisierten Kautschuk, der in Anspruch 9 oder 10 definiert wird.

13. Vibrationsdämpfer aus Kautschuk, umfassend den vulkanisierten Kautschuk, der in Anspruch 9 oder 10 definiert wird.

## Revendications

1. Composition de caoutchouc acrylique comprenant un caoutchouc acrylique contenant un groupe carboxyle et, pour 100 parties en masse du caoutchouc acrylique contenant un groupe carboxyle, de 10 à 100 parties en masse de noir de carbone, de 0,1 à 15 parties en masse d'au moins un antioxydant primaire choisi dans l'ensemble constitué par un antioxydant de type amine et un antioxydant phénolique, et de 0,1 à 15 parties en masse d'au moins un antioxydant secondaire choisi dans l'ensemble constitué par un antioxydant phosphoré et un antioxydant soufré, dans laquelle le noir de carbone a une hauteur feuilletée moyenne Lc d'au moins 2 nm dans la direction de l'axe C d'un plan lamellaire dans son cristallite.

2. Composition de caoutchouc acrylique selon la revendication 1, dans laquelle le noir de carbone est du noir d'acétylène.

3. Composition de caoutchouc acrylique selon l'une quelconque des revendications 1 et 2, dans laquelle l'antioxydant primaire est un antioxydant de type amine.

4. Composition de caoutchouc acrylique selon l'une quelconque des revendications 1 à 3, dans laquelle l'antioxydant primaire est la 4,4'-α,α-diméthylbenzyl-diphénylamine, et l'antioxydant secondaire est au moins un membre choisi dans l'ensemble constitué par le phosphite de tris(nonylphényle), le phosphite de triisodécyle et le thiodipropionate de dilauryle.

5. Composition de caoutchouc acrylique selon l'une quelconque des revendications 1 à 4, dans laquelle le caoutchouc acrylique contenant un groupe carboxyle est un caoutchouc acrylique contenant un groupe carboxyle pouvant être obtenu par copolymérisation d'un acide gras insaturé contenant un groupe carboxyle avec un monomère insaturé de façon que l'acide gras insaturé contenant un groupe carboxyle soit présent en une proportion de 0,1 à 20 % en masse.

6. Composition de caoutchouc acrylique selon l'une quelconque des revendications 1 à 5, qui contient en outre au moins un composé choisi dans l'ensemble constitué par le 2-mercaptobenzimidazole, le 2-mercaptométhylbenzimidazole et le 4,5-mercaptométhylbenzimidazole.

7. Composition de caoutchouc acrylique selon l'une quelconque des revendications 1 à 6, qui contient en outre un agent de vulcanisation.

8. Composition de caoutchouc acrylique selon la revendication 7, dans laquelle l'agent de vulcanisation est le 2,2-bis[4-(4-aminophénoxy)phényl]propane.

9. Caoutchouc vulcanisé obtenu par vulcanisation de la composition de caoutchouc acrylique telle que définie dans l'une quelconque des revendications 1 à 8.

10. Caoutchouc vulcanisé selon la revendication 9, qui a un allongement à la rupture d'au moins 100 % dans un test de traction après exposition à 200°C pendant 7 jours conformément à la norme JIS K6257.

11. Tuyau en caoutchouc comprenant le caoutchouc vulcanisé tel que défini dans la revendication 9 ou 10.

12. Article d'étanchéité comprenant le caoutchouc vulcanisé tel que défini dans la revendication 9 ou 10.

13. Isolateur de vibrations en caoutchouc comprenant le caoutchouc vulcanisé tel que défini dans la revendications 9 ou 10.
